# EUROPEAN PATENT APPLICATION

(11) **EP 3 851 299 A1**
(43) Date of publication of application: **21.07.2021**
(21) Application number: 19895529.6
(22) Date of filing: 19.07.2019
(51) Int. Cl.: B60C 23/04

(54) **FUNCTIONAL COMPONENT**

(30) Priority: 14.12.2018 JP 2018234655
(71) Applicant: BRIDGESTONE CORPORATION, Chuo-ku Tokyo 104-8340 (JP)
(72) Inventor: YAMAGUCHI, Shigeru, Tokyo 104-8340 (JP)
(74) Representative: Oxley, Robin John George
(86) International application number: PCT/JP2019/028502
(87) International publication number: WO 2020/121583

(57) **Abstract**

A functional component to be attached inside a tire, for detecting a state of the tire as information, including: a first substrate having a first sensor that detects a state of the tire; a second substrate having a second sensor that detects a state of the tire different from the state of the tire detected by the first sensor; and a connection means that electrically connects the first substrate and the second substrate, in which the first substrate further includes a communication means that outputs the information detected by the first sensor and the second sensor to outside of the tire, and in which the first substrate and the second substrate are stacked in a tire radial direction, and the second substrate is disposed on an outer side in the tire radial direction.

## Description

### TECHNICAL FIELD

The present invention relates to a functional component or the like that can be attached to a tire.

### BACKGROUND ART

Conventionally, there has been known a technique for mounting a functional component inside a tire, the functional component being provided with a temperature sensor that detects temperature and a pressure sensor that detects pressure inside the tire, and a communication unit that outputs the detected temperature and the pressure to outside of the tire so as to inform a driver or the like of the detected temperature and the pressure (Patent Document 1).

### CITATION LIST

### Patent Document

Patent Document 1: Japanese Unexamined Patent Application Publication No. 2013-226853.

### SUMMARY OF THE INVENTION

### Technical Problem

However, since such a functional component is produced by a dedicated design depending on the type of tire or applications, in a case where there are 10 types of applications, for example, it has been required to produce 10 types of mounting substrates designed exclusively for the10 types for confirming the performances. In addition, because the functional component utilizes a wireless device as a communication unit and outputs detected information to the outside, it is required to obtain authorization for use permission by a public institution, when using the functional component on a public road. Therefore, if the substrate is produced according to the type of tire or applications, man-hours relative to development and production increase and thus costs tend to increase.

The present invention has been made in view of the above-mentioned problems, and aims at providing a functional component with which the man-hours relative to development and production can be reduced, in accordance with the performance required as the functional component.

### Solution to Problem

As the configuration of a functional component for solving the above-mentioned problems, there is provided a functional component to be attached inside a tire, for detecting a state of the tire as information. The functional component includes: a first substrate having a first sensor that detects one state of the tire; a second substrate having a second sensor that detects a state of the tire different from the one state of the tire detected by the first sensor; and a connection section that electrically connects the first substrate and the second substrate, in which the first substrate further includes a communication means that outputs the information detected by the first sensor and the second sensor to outside of the tire, and in which the first substrate and the second substrate are stacked in a tire radial direction, and the second substrate is disposed on an outer side in the tire radial direction.

### BRIEF DESCRIPTION OF THE DRAWINGS

FIGS. 1A and 1B are diagrams illustrating an example of how a functional component is attached to a tire.
FIGS. 2A to 2C are respectively an exploded perspective view of the functional component, a plan view and a partial sectional view of a housing case.
FIG. 3A is an exploded perspective view of a module.
FIGS. 4A to 4C are block diagrams of a basic substrate.
FIGS. 5A and 5B are block diagrams of an expansion substrate.
FIG. 6 is a diagram illustrating a schematic block diagram of a strain sensor.
FIGS. 7A to 7C are diagrams roughly illustrating the assembly process of the functional component.
FIG. 8 is a plan view illustrating a state in which a battery is connected to the basic substrate.
FIGS. 9A and 9B are block diagrams illustrating another configurations of the expansion substrate.

Hereinafter, the present invention will be described in detail through embodiments of the invention, but the following embodiments are not intended to limit the invention(s) set forth in the claims. Furthermore, not all combinations of the features described in the embodiments are essential to the solving means of the invention, and selectively employed configurations are included.

### DESCRIPTION OF EMBODIMENTS

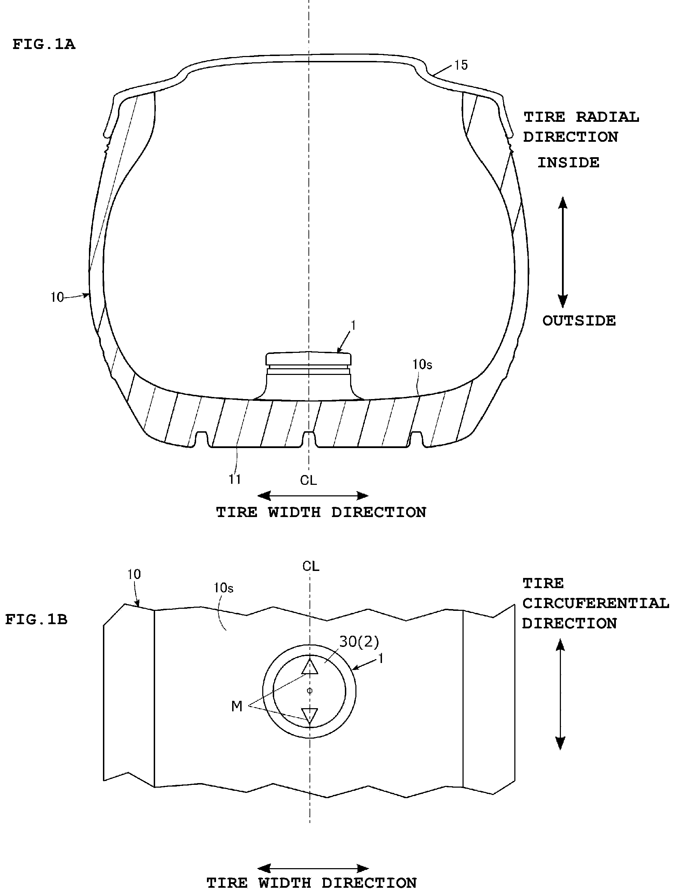

FIGS. 1A and 1B are diagrams illustrating an example of how a functional component 1 is attached to a tire 10. As illustrated in FIGS. 1A and 1B, the functional component 1 is disposed at the width direction center of an inner peripheral surface 10s that is a rear side of a tread 11, which contacts with a road surface, of the tire 10. The functional component 1 is firmly fixed by, for example, an adhesive agent or the like to the inner surface (the inner peripheral surface) 10s of the tire 10.

The functional component 1 is so configured as to be able to detect information indicative of states of the tire 10, including the pressure and temperature of the air filled in a closed space (hereinafter referred to as the tire air chamber) formed by assembling the tire 10 to a wheel rim 15, and transmit the detected information to, for example, a main unit provided in a vehicle which is not shown in the figure.

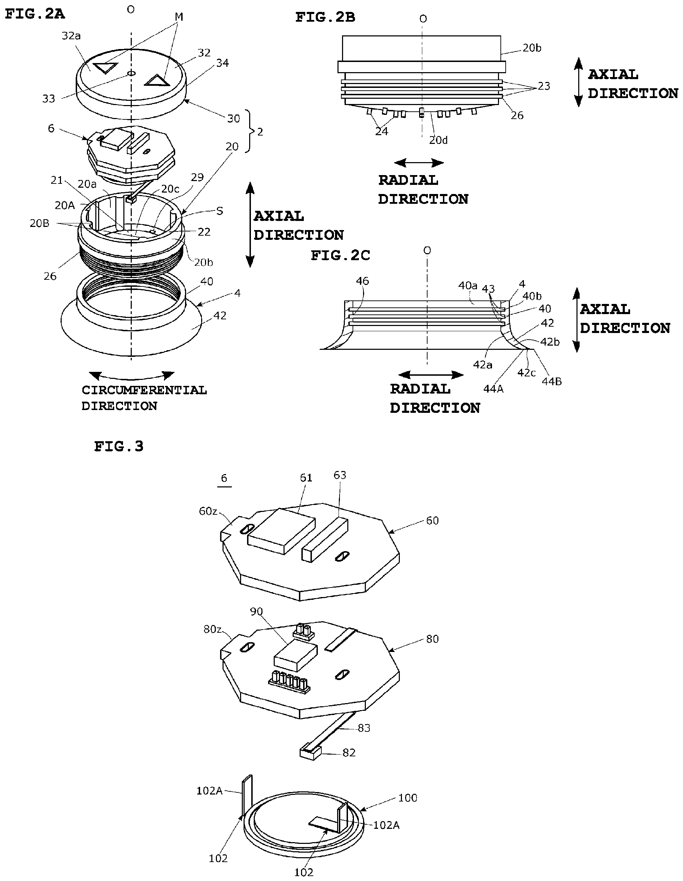

FIG. 2A is an exploded perspective view illustrating an example of the configuration of the functional component 1, FIG. 2B is a plan view of a housing case 20, and FIG. 2C is a cross-sectional view of a skirt 4. As illustrated in Fig. 2A, the functional component 1 is roughly configured by a module 6 that detects the state of the tire 10 and a housing 2 that houses the module 6.

The housing 2 is provided with a housing case 20 having a housing space S (housing section) for the module 6, and a cap 30 that functions as a lid for the housing case 20, and is formed generally in a disk shape by combining the housing case 20 and the cap 30 together.

The housing case 20 is formed into a bottomed cylindrical shape with an opening on one side, by a circular bottom part 21 and a peripheral wall part 22 which extends along the outer periphery from an outer peripheral edge of the bottom part 21 and rises up annularly from the bottom part 21. A housing space S capable of housing the module 6 is formed by an inner bottom surface 20c of the bottom part 21 and an inner peripheral surface 20a of the peripheral wall part 22. In the following description, the description will be made with the use of terms such as an axial direction, a circumferential direction, and a radial direction and so on while taking an axis O of the peripheral wall part 22 as a reference.

On the inner peripheral surface 20a of the peripheral wall part 22, a concave part 20A recessed outwardly in the radial direction relative to the axis O and a plurality of convex parts 20B protruding toward the direction of the axis O and extending along the axis O are formed so as to position the module 6 housed in the housing space S at a predetermined position. The bottom part 21 of the housing case 20 is provided with a through hole 29 that penetrates from the inner bottom surface 20c to an outer bottom surface 20d. Furthermore, the inner bottom surface 20c of the bottom part 21 is provided with a support means such as a protrusion, which is not shown in the figure, that supports the module 6 housed in the housing space S from a lower side.

As illustrated in FIG. 2B, the outer bottom surface 20d of the bottom part 21 is formed, for example, in a spherical shape, of which center of curvature is set on the axis O and the central part of the outer bottom surface 20d is protruded outwardly in the axial direction than the outer peripheral edge side of the outer bottom surface 20d. Incidentally, the shape of the outer bottom surface 20d described above is not limited to the spherical shape, but may be set appropriately. On the outer bottom surface 20d, a plurality of convex parts 24 are formed which protrude from the outer bottom surface 20d toward the inner peripheral surface 10s of the tire 10. The plurality of convex parts 24 are formed so as to be, for example, arranged radially about the axis O of the outer bottom surface 20d and at equal intervals in the circumferential direction (equal intervals around the axis O), and so as to extend in the normal direction of the outer bottom surface 20d. The extension length of the convex parts 24 may be set to be, for example, a length that does not protrude beyond a tip end part 44A of a skirt 4, which is described later, when the skirt 4 is attached to the housing 2. The plurality of convex parts 24 may be formed to be, for example, a columnar shape such as a pillar shape or a pyramidal shape, or a combination of these shapes, or instead of the convex parts 24, concave parts may be formed that recess from the outer bottom surface 20d toward the inner bottom surface 20c side, or the convex parts and the concave parts may also be combined.

A skirt attachment part 26 for attaching the skirt 4 described later is provided on the outer periphery surface 20b of the peripheral wall part 22. The skirt attachment part 26 is configured, for example, by a plurality of annular convex parts 23 provided on the lower half of the peripheral wall part 22. The annular convex part 23 is an annular body extending over the circumferential direction of the outer circumferential surface 20b, and is provided in plural numbers at predetermined intervals (three in this embodiment) in the axial direction. The annular convex part 23 may be configured to extend intermittently in the circumferential direction without extending over the entire circumference.

As illustrated in FIG. 2C, the skirt 4 is provided with a cylindrical part 40 cylindrically formed to be able to enclose the skirt attachment part 26, and an enlarged part 42 extending from the cylindrical part 40 toward the inner peripheral surface 10s side. On an inner peripheral surface 40a of the cylindrical part 40, an annular concave part 43 extending along the circumferential direction and recessed in the radial direction is formed in plural numbers to provide a case attachment part 46 to be fitted with the annular convex parts 23 constituting the skirt attachment part 26 formed on the outer circumference of the housing case 20.

The enlarged part 42 is formed in a fun-like trumpet shape and is continuous from the tubular part 40. An inner peripheral surface 42a of the enlarged part 42 is formed as a curved surface that, in the axial cross section, gradually expands in diameter from the outer peripheral edge of the outer bottom surface 20d of the housing case 20 toward the inner peripheral surface 10s side of the tire 10. Furthermore, an outer peripheral surface 42b is formed as a curved surface and is smoothly continuous with the outer peripheral surface 40b of the tubular part 40 and gradually expands in diameter toward the inner peripheral surface 10s of the tire 10. The thickness of the enlarged part 42 formed by the inner peripheral surface 42a and the outer peripheral surface 42b is set in a tapered shape so that the thicknesses gradually become thinner toward axial direction end parts on the inner peripheral surface 10s side. The tip end 44A of the inner peripheral surface 42a and a tip end 44B of the outer peripheral surface 42b are connected via a flat surface 42c. That is, the flat surface 42c is an annular surface enclosed by the tip end 44A of the inner peripheral surface 42a, the tip end 44B of the outer peripheral surface 42b and a plane perpendicular to the axis O.

The skirt 4, by being attached to the skirt attachment part 26 of the housing case 20, extends from the outer bottom surface 20d of the housing 2 toward the inner peripheral surface 10s side of the tire 10 (in the direction away from the outer bottom surface 20d).

As illustrated in FIG. 2A, the cap 30 is provided with a circular ceiling part 32 and a peripheral wall part 34 extending along an outer peripheral edge of the ceiling part 32. On an outer side surface 32a of the ceiling part 32, attachment marks M are formed that indicate a direction for attaching the functional component 1 to the tire 10. The attachment marks M are formed, for example, by engraving or printing. As illustrated in FIG. 1B, the attachment marks M indicate that the functional component 1 is to be attached on the inner peripheral surface 10s of the tire 10 in such a manner that the arrows are oriented in the tire circumferential direction. Incidentally, the direction indicated by the attachment marks M may be set appropriately in correspondence with a detection direction of the module 6. A hole 33 penetrating in the axis O direction is formed in the ceiling part 32. The hole 33 functions as an introduction hole for taking in air inside the tire into the housing space S of the housing case 20 when the opening of the housing case 20 is closed by the cap 30. The peripheral wall part 34 has an inner diameter capable of enclosing the outer periphery of the outer peripheral surface 20b of the peripheral wall part 22 of the housing case 20. The cap 30 configured as described above is integrated with the housing case 20 by a fitting and fixing means or the like, which is not shown in the figure, in a state in which the attachment marks M provided on the outer side surface 32a are oriented in a predetermined direction with respect to the housing case 20.

For the above-described housing case 20 and the cap 30, a material such as synthetic resin or the like is suitable, for example, from the viewpoint of weight reduction and the strength of the functional component 1. For the skirt 4, an elastic material made of elastomer such as rubber, or resin or the like having flexibility is preferable.

FIG. 3 is an exploded perspective view of the module 6. The module 6 according to the present embodiment is provided with a plurality of substrates 60 and 80 as a first substrate and a second substrate, and a battery 100 that supplies the power to the substrate 60 and the substrate 80. The substrate 60 and the substrate 80 are formed in a roughly octagonal shape, for example, so as to correspond to the concave part 20A and the plurality of convex parts 20B provided in the housing case 20, and so as to be able to be housed in the housing case 20 by bringing the peripheral edges of the substrates 60 and 80 into contact with the convex portions 20B, and making protruding pieces 60z and 80z each protruding from a part of each of the peripheral edges to coincide with the concave portion 20A.

The substrate 60 and the substrate 80 are each configured to have a different function for detecting the state of the tire 10. For example, the substrate 60 is provided with a detection means that detects, as basic information, whether or not the tire 10 is in a normal state, and the substrate 80 is provided, in order to add extended functionality, with a detection means that detects, in addition to the information detected by the substrate 60, another state of the tire 10. Hereinafter, the substrate 60 is referred to as the basic substrate 60 and the substrate 80B is referred to as the expansion substrate 80.

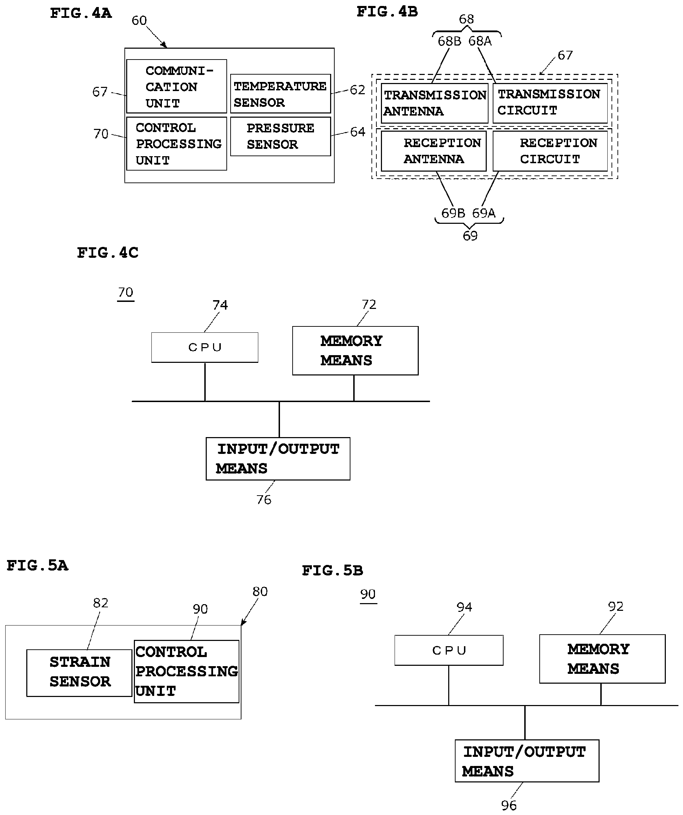

FIGS. 4A to 4C are block diagrams of the basic substrate 60. An example of the functions set in the basic substrate 60 and the expansion substrate 80 will be described below. As illustrated in FIG. 4A, the basic substrate 60 is provided with a temperature sensor 62 as a first sensor for acquiring temperature in the air chamber of the tire 10, a pressure sensor 64 for acquiring pressure in the air chamber, a communication unit 67 for outputting, to the outside of the tire, the detected value detected by each of the sensors 62 and 64, and a control processing unit 70 as a first processing means for processing the information detected by the plurality of sensors 62 and 64, and processing the operations of the plurality of sensors 62 and 64 and the communication unit 67, and processing the exchange of information with the expansion substrate 80.

The temperature sensor 62 and the pressure sensor 64 detect the temperature and the pressure of the air inside the tire air chamber, by the air inside the tire air chamber introduced into the housing space S through the hole 33 provided in the cap 30. The temperature sensor 62 and the pressure sensor 64 operate on the basis of signals output from the control processing unit 70.

As illustrated in FIG. 4B, the communication unit 67 is provided with a transmission section 68 and a reception section 69. The transmission section 68 is configured roughly by a transmission circuit 68A and a transmission antenna 68B, and the reception section 69 is configured roughly by a reception circuit 69A and a reception antenna 69B.

The transmitter 68 converts the information input from the control processing unit 70 into a predetermined signal by the transmission circuit 68A, and transmits the predetermined signal from the transmission antenna 68B to a main unit installed in a vehicle, which is not shown in the figure. The transmission section 68 operates, for example, each time the information is input from the control processing unit 70.

The reception section 69, when a predetermined radio wave is input to the reception antenna 69B from a functional component management device, which is not shown in the figure, for managing the functional component 1, judges that the reception circuit 69A has received the radio wave, opens a communication circuit from the outside to the control processing unit 70, and outputs the input information to the control processing unit 70. In a case where no radio wave is received for a predetermined period of time, the reception section 69 stops functioning.

The control processing unit 70 is provided with a memory means 72 such as a memory in which programs or the like are stored, a CPU 74 that functions as an arithmetic processing means, and an input/output means 76, and operates as a so-called computer.

The memory means 72 stores, for example, a unique identification number set in the basic substrate 60, a program for controlling the operations of the temperature sensor 62 and the pressure sensor 64, a program for causing the communication unit 67 to operate, a program for executing processing when a signal is input from the outside to the reception section 69 of the communication unit 67, and a program for controlling the expansion substrate 80, and so on. In addition, the memory means 72 stores, as a history, the information such as the temperature and the pressure inside the tire 10 detected by the temperature sensor 62 and the pressure sensor 64.

The input/output means 76 functions as an interface for outputting signals for causing the temperature sensor 62 and the pressure sensor 64 to operate and for inputting the temperature and the pressure detected by the temperature sensor 62 and the pressure sensor 64, and as an interface for enabling communication with the expansion substrate 80.

The control processing unit 70 controls, by executing the program stored in the memory means 72 by the CPU 74, for example, the operations of the sensors that control the detection of the temperature and the pressure by the temperature sensor 62 and the pressure sensor 64, the operation of the communication unit 67, and the operation of the exchange of the information with the expansion substrate 80.

The control processing unit 70 outputs signals to the temperature sensor 62 and the pressure sensor 64 on the basis of a sampling time set in the memory means, for example, and causes the temperature sensor 62 and the pressure sensor 64 to detect the temperature and the pressure. The control processing unit 70 converts the information of the temperature and the pressure detected by the temperature sensor 62 and the pressure sensor 64 into predetermined signals, such as digital signals, for example, and outputs the predetermined signals to the communication unit 67.

The control processing unit 70, when the communication circuit to the reception section 69 is opened, outputs, updates, or adds the information stored in the memory means 72 on the basis of commands input by means of radio waves from the functional component management device, which is not shown in the figure, that manages the functional component 1. For example, in a case where an identification number is input from the functional component management device, the control processing unit 70 causes the memory means 72 to store the identification number, and in a case where the identification number is requested, outputs the identification number via the transmission section 68.

In other words, the control processing unit 70 has a function as a so-called RFID.

In a case where the information is input from the expansion substrate 80, the control processing unit 70 outputs the input information to the transmission section 68 of the communication unit 67. In addition, in a case where a command relative to the expansion substrate 80 is input from the functional component management device while the communication circuit to the reception section 69 is being opened, the control processing unit 70 outputs the input command to the expansion substrate 80.

As illustrated in FIG. 3, the temperature sensor 62, the pressure sensor 64, the transmission circuit 68A and the reception circuit 69A of the communication unit 67, and the control circuit functioning as the control processing unit 70 described above are integrated, for example, as a module that integrates the functions in a single chip, and mounted on the surface of the substrate as the sensor unit 61. The transmission antenna 68B and the reception antenna 69B, which constitute the communication unit 67, are mounted on the surface of the substrate as an antenna unit 63, as a separate unit from the sensor unit 61, for example, on the same surface of the substrate.

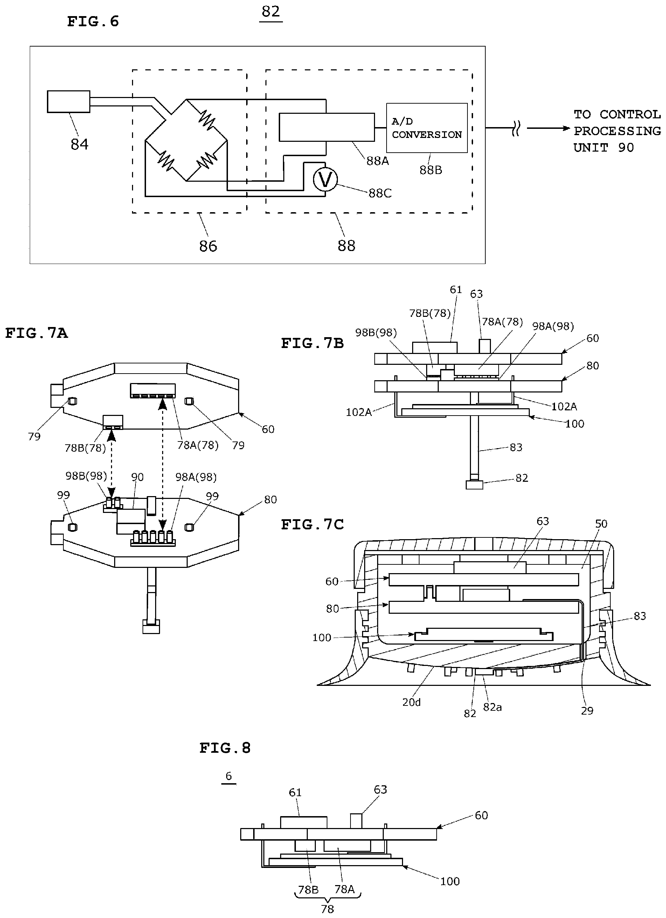

FIG. 5A is a block diagram of the expansion substrate 80. FIG. 6 is a diagram illustrating a schematic diagram of a strain sensor 82. As illustrated in FIG. 5A, the expansion substrate 80 is provided with the strain sensor 82 as a second sensor that detects deformation of the tire and a control processing unit 90 as a second processing means that processes the information detected by the strain sensor 82 and controls the operation of the strain sensor 82.

As illustrated in FIGS. 3 and 6, the strain sensor 82 is connected to the expansion substrate 80 by a connection line 83 such as a flexible cable. The strain sensor 82 is provided with, for example, a strain gage 84, a bridge circuit 86 and a strain amplifier 88 and so on. The strain gage 84 constitutes a part of the bridge circuit 86. A voltage is applied to the bridge circuit 86 from the strain amplifier 88, for example, and a voltage difference following a change in the resistance value at the time when the strain gage 84 detects strain is output to the strain amplifier 88 as a signal.

The strain amplifier 88 is provided with a signal amplifying circuit 88A, an A/D converter 88B, and a power supply 88C, amplifies the signal input from the bridge circuit 86 by the signal amplifying circuit 88A, converts the amplified signal into the digital signal by the A/D converter 88B and outputs the digital signal to the control processing unit 90. Namely, the voltage value corresponding to the amount of strain detected by the strain gage 84 is output as the digital signal to the expansion substrate 80 by the strain amplifier 88.

In the present embodiment, as illustrated in FIG. 3, as the strain sensor 82, a sensor chip configured as a rectangular so-called piezoresistive semiconductor is applied, in which the functions of the strain gage 84, the bridge circuit 86 and the strain amplifier 88 are integrated into a single chip. The strain sensor 82 is attached to the outer bottom surface 20d of the housing 2 in such a manner that, for example, a measurement surface 82a is defined and the measurement surface 82a faces to the inner peripheral surface 10s of the tire 10 (see FIG 7C). By mounting the strain sensor 82 in this manner, the strain of the time when the tire 10 is deformed in the circumferential direction or in the width direction, or the like, can be detected isotropically. In addition, by using a semiconductor for the strain sensor 82, the reliability and the durability can be improved, and also the power consumption can be reduced.

As illustrated in FIG. 5B, the control processing unit 90 is provided with a memory means 92 in which programs and the like are stored, a CPU 94 that functions as an arithmetic processing means and an input/output means 96, and has functions as a so-called computer. The control processing unit 90 executes, for example, the processing for the operation of detecting the strain of the tire by the strain sensor 82 and the processing for outputting the strain detected by the strain sensor 82 in the format defined in the control processing unit 70 provided on the basic substrate 60, and also stores the strain in the memory means 92. Furthermore, the control processing unit 90 operates, via the control processing unit 70, on the basis of the command input from the functional component management device, and outputs a result of the processing based on the command to the basic substrate 60. As illustrated in FIG. 3, the control processing unit 90 is configured, for example, as a one-chip computer and is mounted on the expansion substrate 80.

The basic substrate 60 described above is provided with a substrate connection means 78 for connecting the expansion substrate 80, and the expansion substrate 80 is provided with a substrate connection means 98 for connecting to the basic substrate 60.

The substrate connection means 78 is provided on the reverse side of the mounting surface of the basic substrate 60 on which the sensor unit 61 and the antenna unit 63 are mounted, and the substrate connection means 98 is provided on the surface which is the same with the mounting surface of the expansion substrate 80 on which the control processing unit 90 is mounted. That is, when the functional component 1 is attached to the inner surface 10s of the tire 10, the basic substrate 60 is connected so as to be located radially inward than the expansion substrate 80.

The substrate connection means 78 is provided with an input/output section 78A for exchange of information with the expansion substrate 80, and a power receiving section 78B for receiving the power supplied from the expansion substrate 80. The substrate connection means 98 is provided with an input/output section 98A for exchange of information with the basic substrate 60 and a power supply section 98B for supplying the power to the basic substrate 60.

As a method of electrically connecting the substrate connection means 78 of the basic substrate 60 and the substrate connection means 98 of the expansion substrate 80 to each other, connection by connection pins is suitable, for example. As an example of connection by the connection pins, it may be arranged that pin sockets that are mountable on the substrate are applied for the input/output section 78A and the power receiving section 78B of the basic substrate 60, and pin headers corresponding to the pin sockets and having pins that can be inserted into the pin sockets are applied for the input/output section 98A and the power supplying section 98B of the expansion substrate 80, and the pin sockets and the pin headers are mounted on the substrates and physically connected to each other. In other words, the pin sockets and the pin headers constitute a connection section that connects the basic substrate 60 with the expansion substrate 80. By connecting the basic substrate 60 with the expansion substrate 80 using the connection pins in this way, because a mutual positional relationship can be maintained by the connection pins, a distance between the basic substrate 60 and the expansion substrate 80 can be set to a minimum distance. As a result, the space occupied by the substrates 60 and 80 in the housing space S becomes smaller, hence the space efficiency can be improved.

Incidentally, the connection between the basic substrate 60 and the expansion substrate 80 is not limited to the connection by the pin sockets and the pin headers, but the substrates 60 and 80 may be connected to each other by directly soldering with the use of conductive pins. Also, the connection is not limited to the connection by the connection pins, but may be electrically connected by a flexible cable or the like.

The basic substrate 60 and the expansion substrate 80 are provided with a power receiving terminal 79 and a power receiving terminal 99 respectively, which are capable of connecting a battery 100. The power receiving terminals 79 and 99 are provided, as long holes penetrating in the plate thickness direction of the substrates 60 and 80, at two places separated by a predetermined distance, respectively. Each of the long holes is so configured that the inner periphery surface and a predetermined range of the periphery edge are covered with an electrical conductor and exposed to the substrate surface as an electrode. In each of the substrates 60 and 80, one of the long holes is set as a positive electrode and the other one of the long holes is set as a negative electrode. The power receiving terminal 99 provided on the expansion substrate 80 is connected to the power supplying section 98B.

As illustrated in FIG. 3, the battery 100 is a so-called button battery and is provided with connection terminals 102 that can be inserted into the power receiving terminal 79 and the power receiving terminal 99 provided on the basic substrate 60 and the expansion substrate 80, respectively. The connection terminals 102 are each bonded to each electrode set in the battery 100, for example, by soldering or the like, and each has an extension piece 102A extending in the same direction. The extension pieces 102A and 102A are formed such that a distance between the extension pieces 102A and 102A is slightly shorter than a distance between the pair of power receiving terminals 79 provided on the substrate 60 and a distance between the pair of power receiving terminals 99 provided on the substrates 80, so as to be able to hold the power receiving terminals 79 and 99. One of the extension pieces 102A is formed to be connectable to the positive pole of the power receiving terminal 79 or of the power receiving terminal 99, and the other one of extension piece 102A is formed to be connectable to the negative pole of the power receiving terminal 79 or of the power receiving terminal 99.

As illustrated in FIG. 7B, according to the above-described configuration, the module 6 is configured such that the basic substrate 60 and the expansion substrate 80 are integrated by connecting the substrate connection means 78 of the basic substrate 60 with the substrate connection means 98 of the expansion substrate 80, and then the connection terminals 102 of the battery 100 are connected to the power receiving terminals 99 of the expansion substrate 80 so as to attach the battery 100 to the expansion substrate 80. Namely, the power of the battery 100 is supplied to the power receiving terminals 99 of the expansion substrate 80, and the power is supplied to the basic substrate 60 via the power receiving section 78B of the basic substrate 60 which is connected to the power supplying section 98B of the expansion substrate 80.

Then the module 6 is housed in the housing case 20 in a state in which the battery 100 is mounted on the expansion substrate 80 which is integrated with the basic substrate 60. First, while passing the strain sensor 82 and the connecting wire 83 through the through hole 29 provided in the bottom part 21 of the housing case 20, the module 6 is placed at a predetermined position in the housing space S and the strain sensor 82 is disposed at the center of the outer bottom part 20d, and the strain sensor 82 and the connecting wire 83 are fixed to the outer bottom surface 20d by a fixing means such as an adhesive agent.

Next, a filler 50 is filled in the housing space S in which the module 6 is housed and by letting the filler 50 to harden, the basic substrate 60 and the expansion substrate 80 are fixed, and the expansion substrate 80 and the battery 100 are fixed. As a result, the module 6 composed of the basic substrate 60, the expansion substrate 80 and the battery 100 which are fixed to each other by the filler 50 is fixed to the housing case 20, and the through hole 29 provided in the bottom part 21 is closed. As to a position where the filler 50 is to be filled, since the temperature sensor 62 and the pressure sensor 64 are integrated as the sensor unit 61, the filler 50 may be filled up to a position not reaching the upper surface of the sensor unit 61, for example, so as not to block the air intake hole provided in the sensor unit 61. For the filler 50, a material made of synthetic resin, for example, is suitable. As the material of the filler 50, a material capable of waterproofing, dustproofing, and protecting the substrate with respect to the module 6 housed in the housing 2 may be used, for example, there may be mentioned synthetic resin such as urethane-based resin or epoxy-based resin. By applying such a material to the filler 50, the filler 50 can maintain sufficient resistance to the forces received from the battery 100, the basic substrate 60 and the expansion substrate 80 when the tire 10 is rotating, especially even when rotating at a high speed. In particular, by using the epoxy-based resin, weather resistance can further be improved in addition to the waterproofing, the dustproofing and the substrate protection.

The functional component 1 configured as described above is bonded to the inner peripheral surface 10s of the tire 10 by filling the adhesive agent in the cup-shaped space formed by the inner peripheral surface 42a of the skirt 4 attached to the outer circumference of the housing 2 and the outer bottom surface 20d of the housing 2. In other words, the strain sensor 82 is adhered to the inner peripheral surface 10s of the tire 10 in a state of being embedded in the adhesive agent.

In the above-described embodiment, an example in which the expansion substrate 80 is attached to the basic substrate 60 has been given, however, in a case of monitoring the temperature and the pressure of the tire 10, the battery 100 may be directly attached to the basic substrate 60 as illustrated in FIG. 8.

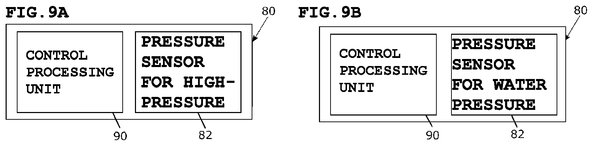

FIGS. 9A and 9B are block diagrams illustrating another forms of the expansion substrate 80. In the above-described embodiment, it has been explained that the strain sensor 82 is mounted on the expansion substrate 80, however, without being limited to this, the functions to be mounted on the expansion substrate 80 may be set as required. Namely, it may be an acceleration sensor, or as illustrated in FIG. 9A, it may be a pressure sensor 82 for high pressure that measures a higher-pressure range than the pressure sensor 64 provided on the basic substrate 60, or in a case where water is injected into the tire air chamber, such as in the case of tires for heavy duty vehicles used in mines or the like, it may be a pressure sensor 82 for water pressure or the like. In any cases, it is preferable to configure such that the expansion substrate 80 is provided with a control processing unit 90 associated with each sensor, and the information detected by the sensors are output to the basic substrate 60 in a format which can be handled by the control processing unit 70 of the basic substrate 60. Furthermore, by storing the information detected by the expansion substrate 80 in the memory means 92 of the control processing unit 90 provided on the expansion substrate 80, the burden on the memory means 72 of the basic substrate 60 can be reduced. With this configuration, the capacity of the memory means 72 can be made smaller, that is, the memory as the memory means 72 can be made small-sized.

In the above-described embodiment, the explanation has been made as to that the temperature sensor 62 and the pressure sensor 64 are provided on the basic substrate 60, and the strain sensor 82 is provided on the expansion substrate 80, however, the number of sensors to be provided on the basic substrate 60 and the expansion substrate 80 is not limited thereto and may be set as appropriate.

In the above-described embodiment, the explanation has been made with respect to the case in which the module 6 is configured by two substrates 60 and 80, however, the number of substrates is not limited thereto and three or more substrates may be used. In this case, each of the expansion substrates may be provided with a connection section, such as the above-mentioned connection pins, which connect the expansion substrates to each other, so as to electrically connect the expansion substrates.

As described above, by producing the basic substrate 60 provided with the detection means that detects the basic state of the tire and the communication unit 67, and producing the expansion substrate 80 in accordance with the type of tire or applications, the number of man-hours required for development and production can be reduced since it is only need to use the basic substrate 60 provided with the communication unit 67 as a common substrate, and develop and produce the expansion substrate 80 that expands the function of the basic substrate 60 in accordance with the performance required as the functional component.

Furthermore, by disposing the expansion substrate 80, which is not provided with the communication unit 67, on an outer side in the tire radial direction, that is, disposing in the vertical direction on the side of the attachment part (the skirt 4), which is to be attached to the tire 10, of the functional component 1, because there will be nothing that blocks the radio waves when the communication unit 67 outputs the information to the outside of the tire 10, the information indicative of the state of the tire 10 can be output securely to the outside of the tire 10 and the communication performance can be improved.

Moreover, by configuring each of the basic substrate 60 and the expansion substrate 80 so as to be disposed in a stacked fashion in the vertical direction, each substrate can be made small-sized, and the area for attaching the module 6 to the tire 10 can be minimized.

Incidentally, the configuration of the basic substrate is not limited to the one described in the above-described embodiment. For example, depending on the type of a tire or the application required for the functional component 1, the functions of the basic substrate may be extracted and, for selectively required functions, these functions may be moved to the expansion substrate.

The present invention can also be described as follows. Namely, the functional component according to an aspect of the present invention is a functional component to be attached inside a tire, for detecting a state of the tire as information, including: a first substrate having a first sensor that detects one state of the tire; a second substrate having a second sensor that detects a state of the tire different from the one state of the tire detected by the first sensor; and a connection section that electrically connects the first substrate and the second substrate, in which the first substrate further includes a communication means that outputs the information detected by the first sensor and the second sensor to outside of the tire, and in which the first substrate and the second substrate are stacked in a tire radial direction, and the second substrate is disposed on an outer side in the tire radial direction.

According to this configuration, since it is only needed to use the first substrate provided with the communication means as a common substrate, and develop and produce the second substrate in accordance with the performance required as the functional component, the number of man-hours required for development and production can be reduced. In addition, by disposing the second substrate, which is not provided with the communication means, on an outer side in the tire radial direction, because there will be nothing that blocks the radio waves when the communication means outputs the information to the outside of the tire, the information can be output accurately to the outside of the tire.

Furthermore, as another configuration of the functional component, the functional component may be configured such that the connection pins are used for the connection section, the first substrate and the second substrate are integrated by means of resin, the first substrate includes the first processing means that processes the information detected by the first sensor, and the second substrate includes the second processing means that processes the information detected by the second sensor.

### REFERENCE SIGN LIST

1: Functional component, 2: Housing, 4: Skirt, 6: Module, 10: Tire, 50: Filler, 60: Basic substrate, 62: Temperature sensor, 64: Pressure sensor, 67: Communication unit, 80: Expansion substrate, 82: Strain sensor, 100: Battery, S: housing space.

## Claims

1. A functional component to be attached inside a tire, for detecting a state of the tire as information, comprising:
a first substrate having a first sensor that detects one state of the tire; and
a second substrate having a second sensor that detects a state of the tire different from the one state of the tire detected by the first sensor; and
a connection section that electrically connects the first substrate and the second substrate,
wherein the first substrate further includes a communication means that outputs the information detected by the first sensor and the second sensor to outside of the tire, and
wherein the first substrate and the second substrate are stacked in a tire radial direction, and the second substrate is disposed on an outer side in the tire radial direction.

2. The functional component according to claim 1, wherein the connection section comprises connecting pins.

3. The functional component according to claim 1 or 2, wherein the first substrate and the second substrate are integrated by means of resin.

4. The functional component according to any one of claims 1 to 3, wherein the first substrate includes a first processing means that processes the information detected by the first sensor, and the second substrate includes a second processing means that processes the information detected by the second sensor.
